# EUROPEAN PATENT SPECIFICATION

(11) **EP 2 734 437 B1**
(45) Date of publication and mention of the grant of the patent: **08.04.2015**
(21) Application number: 12751362.0
(22) Date of filing: 09.07.2012
(51) Int. Cl.: B63G 3/04, B63G 8/30, B64F 1/04

(54) **APPARATUS AND METHOD FOR LAUNCHING AN UNMANNED AERIAL VEHICLE (UAV) FROM A SUBMERSIBLE**
VORRICHTUNG UND VERFAHREN ZUM ABSCHIESSEN EINES UNBEMANNTEN FLUGKÖRPERS (UAV) AUS EINEM UNTERWASSERFAHRZEUG
DISPOSITIF ET METHODE POUR LE LANCEMENT D'UN VEHICULE AERIEN SANS PILOTE A PARTIR D'UN VEHICLE SOUS-MARIN

(30) Priority: 19.07.2011 IT BO20110431
(43) Date of publication of application: 28.05.2014
(73) Proprietor: Calzoni S.r.L., 40012 Calderara Di Reno (IT)
(72) Inventor: STELLA, Vittorio, I-44121 Ferrara (IT)
(74) Representative: Firmati, Leonardo
(86) International application number: PCT/IB2012/053506
(87) International publication number: WO 2013/011412

(56) References cited:
- US-A- 3 137 203
- US-A- 3 499 364
- US-A- 5 363 791
- US-A1- 2005 230 535
- US-A1- 2009 107 386

## Description

### Technical Field

This invention relates to an apparatus for launching a remotely piloted aircraft (better known as "unmanned aerial vehicle") from a submarine, a submarine mast comprising that apparatus, a submarine comprising that mast and a method for launching a remotely piloted aircraft from a submarine.

In this invention, the term "submarine" is used to mean any submersible watercraft, including naval vessels designed mainly for independent operation below the surface of the water and also able to navigate partly above surface.

In other words these naval vessels developed out of traditional "submersible" watercraft and thus fall within the scope of the invention.

The invention applies generally to the naval (or nautical) sector and, more specifically, to the production of military submarines.

### Background Art

During operational missions, submarines often need to reconnoitre the surrounding area to allow the crew to gather (collect) data and information useful for careful planning of the steps to be taken.

In this regard, it is known that a submarine can be equipped with one or more remotely piloted aircraft, also known as UAVs (*Unmanned Aerial Vehicles*), housed inside the sail.

The integration of a system of this kind, while not interfering with the submarine's traditional capabilities, enhances its tactical potential both at open sea and near the coast by supporting operations with a "bird's eye view".

Remotely piloted aircraft are unmanned aerial vehicles (UAVs) which are radio controlled or autopiloted (running mission-specific software).

These aerial vehicles are equipped with photo cameras and different sensors used for different purposes in different missions.

Generally speaking, UAVs are classified in groups according to maximum gross take-off weight, speed or aircraft size (small, medium, large).

In a first known design, developed by Gabler Maschinenbau, a catapult is used to launch the aircraft, which is housed in the mast of a submarine.

The aircraft's wings can be folded along the fuselage to reduce overall size and allow the aircraft to fit into the submarine mast.

In use, the catapult and the aircraft are moved outside the mast and positioned in a launching configuration.

Elastic or pneumatic means are used to launch the aircraft into the air (and to start its mission).

It should be noted that most of these systems are "expendable" since they self-destruct on impact with the ground after the mission has been completed.

Disadvantageously, this solution requires the submarine to rise up above the surface of the water to a considerable extent because, being a horizontal launch system, it is necessary for the aircraft to be well clear of the waves.

Further, the stage preparatory to launching, when the aircraft and the catapult are extracted, makes the submarine easy to locate by radar, causing the secrecy of the mission to go up in smoke.

Moreover, the numerous kinematic mechanisms used for extracting the catapult make the launching mechanism fragile and relatively unreliable.

A second known design, alternative to the one just described, has been proposed by Raytheon and comprises a system for launching the aircraft while the submarine is fully submerged. A design of this kind is disclosed by the document US 2009/0107386, which is considered to be the closest prior art.

According to this design, an underwater capsule is released from a waste disposal outlet of the submarine. The capsule comprises a remotely piloted aircraft and a launching tube (in which the aircraft is housed). The capsule is ballasted so it can sink to a given safety depth.

Also, the capsule is configured to rotate on itself to detach the ballasts and allow the capsule to rise to the surface.

Once at the surface, a wind vane is unfurled so that the force of the wind will cause the launching tube to be inclined at an angle of approximately 35°.

The aircraft (UAV), powered by an electric motor, is then ejected and launched into flight.

Disadvantageously, although this solution theoretically allows the submarine to remain totally invisible during the launch, it is so expensive and complex that to date it is no more than an idea which is still far from being put into practice.

### Disclosure of the Invention

This invention has for an aim to provide an apparatus for launching a remotely piloted aircraft from a submarine and which overcomes the above mentioned disadvantages of the prior art.

More specifically, the aim of the invention is to provide an apparatus for launching a remotely piloted aircraft from a submarine, capable of remaining hidden during aircraft launching operations and simple to construct.

A further aim of the invention is to provide an apparatus for launching a remotely piloted aircraft from a submarine, capable of taking the aircraft to a safe height.

These aims are fully achieved by the apparatus for launching a remotely piloted aircraft according to the invention, comprising a tubular body slidably insertable into a mast of the submarine, extending along a respective principal direction between a first end and a second end, opposite the first, and defining an ejector mouth for the remotely piloted aircraft, a projectile housed in the tubular body and configured to slide along the tubular body and to come out through the ejector mouth during launching (the projectile comprising the remotely piloted aircraft) and launching means by which the projectile is propelled into the air from the mast of the submarine.

According to the invention, The launching means comprise a pneumatic ejection device connected to the tubular body and configured to feed a predetermined amount of air under pressure into the tubular body in order to push the projectile out of the ejector mouth until reaching a first height "Q1", and a fuel-driven propulsion unit connected to the projectile, during launching, and designed to be activated when the projectile is outside the tubular body to propel it to a second height "Q2" greater than the first height "Q1".

In other words, the projectile is defined by a shell containing the unmanned aerial vehicle (UAV) in a contracted (or folded-up) configuration and equipped with a fuel-driven propulsion unit able to provide the projectile with extra thrust in addition to that provided by the pneumatic ejection device.

Thus, the apparatus according to the invention provides the projectile (and hence the aircraft) with a "double thrust" during launching which takes the aircraft to flying height without excessive stresses.

In other words, the launching apparatus is configured to provide a pneumatic/fuel-driven combined launching system.

In effect, the pneumatic device, which applies an impulsive action on the projectile (and hence on the aircraft) is used only to eject the projectile itself from the tubular body, or launching tube (that is, from the submarine mast).

On the contrary, the fuel-driven propulsion unit, whose activation on board the submarine would create structural problems for the submarine (on account of thermal loads and thrusts), is not activated until after the projectile has been ejected and allows the second height (greater than operating height) to be reached.

As mentioned, the launching apparatus is housed inside a submarine mast (which is in turn housed in an upper portion of the submarine).

In particular, the mast comprises a guide member extending along a respective principal axis and able to be housed in an upper portion of a submarine and in which the launching apparatus is slidably inserted.

More specifically, the launching apparatus is slidable along the guide member to move parallel with the principal axis (coinciding with the principal direction of the tubular body of the apparatus) between a retracted position and an extended position.

In the extended position, the apparatus (and in particular, the tubular body) rises up above the water's surface, piercing the selfsame surface in order to launch the aircraft.

Thus, for the purposes of launching, it is sufficient for the submarine to navigate at periscope depth where, although a very small part of it is above the water's surface, it is difficult to locate.

In this text, the term "periscope depth" is used to denote an operating condition in which the submarine hull is submerged (i.e. totally below the water's surface) and the mast is partly above the surface.

That is because the masts are generally used to keep certain devices (measuring and viewing instruments, etc.), including the periscope, raised above the water's surface.

It should be noted that periscope depth may also be referred to as "snorkel depth".

Preferably, the pneumatic ejection device comprises a charging chamber connected to the tubular body, at the first end, and configured to accumulate a predetermined quantity of compressed air.

More specifically, the charging chamber is substantially tubular in shape and is flanged (or rigidly connected) to the first end of the tubular body, thereby forming a single tubular duct.

To allow the pressure inside the chamber to rise, the device comprises a partition interposed between the chamber and the tubular body and able to change, as a function of a pressure value inside the charging chamber, between a blocked configuration in which it prevents air from passing between the chamber and the tubular body, and a launching configuration in which it allows compressed air to flow out of the charging chamber into the tubular body.

In other words, the partition acts substantially like a valve which allows air to flow only when a predetermined value (threshold) is exceeded.

Preferably, the partition is of the disposable type, since it is equipped with one or more pre-weakened parts designed to break, without shattering, when the predetermined value is reached, thus allowing air to pass.

Preferably, the propulsion unit comprises a solid-propellant capsule anchored to the projectile in the proximity of the first end of the tubular body.

In other words, the capsule faces the partition and is subjected to the thrusting action applied by the compressed air being fed in.

In this regard, the fuel-driven propulsion unit comprises a thrust base located between the pneumatic device and the capsule (or between the capsule and the partition). More specifically, the thrust base is held in abutment against the capsule.

That way, the base protects the capsule from the action of the compressed air and facilitates expulsion of the projectile (anchored to the capsule) by acting as a thrust surface.

It should be noted that once the projectile has started moving (after activation of the pneumatic device), the base is free to slide away from the capsule.

Advantageously, that means it can be easily removed once the propulsion unit has been activated (thus leaving a capsule nozzle free).

### Brief description of the drawings

These and other characteristics of the invention will become more apparent from the following detailed description of a preferred, non-limiting embodiment of it, with reference to the accompanying drawings, in which:

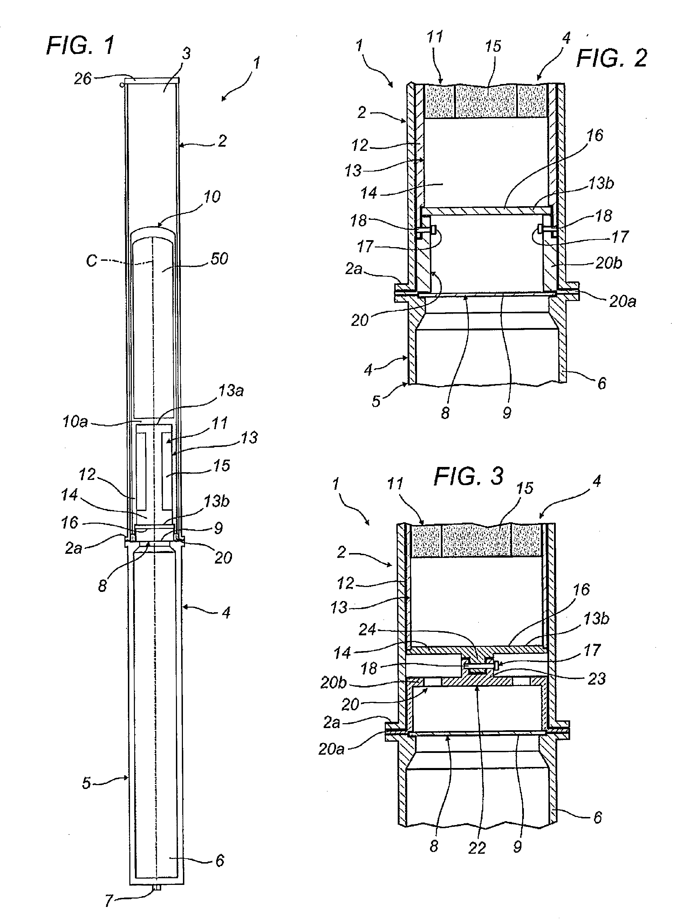

- Figure 1 is a schematic longitudinal cross section illustrating an apparatus for launching a remotely piloted aircraft from a submarine, according to this invention;
- Figure 2 shows a detail of the apparatus of Figure 1;
- Figure 3 shows the same detail but in a second embodiment of the apparatus for launching a remotely piloted aircraft from a submarine, according to this invention;

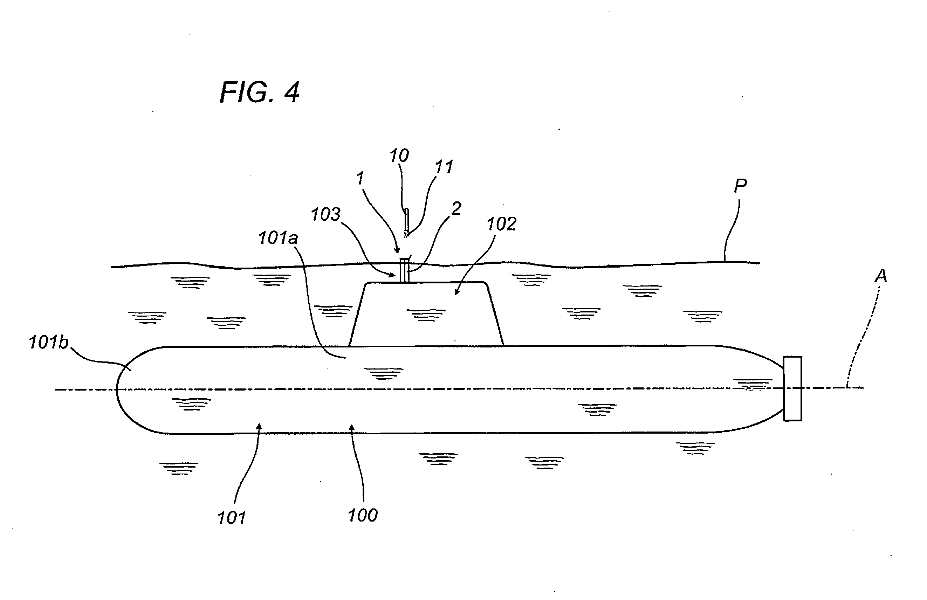

- Figure 4 is a side view of a submarine according to the invention;

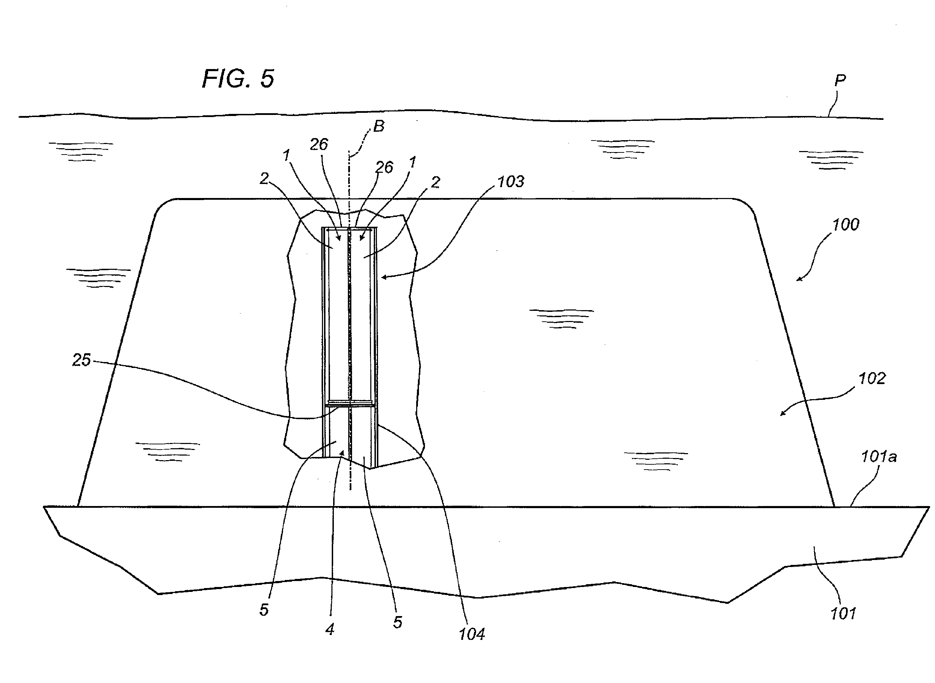

- Figure 5 shows a detail of the submarine of Figure 4, with some parts removed to better illustrate the launching apparatus according to the invention in a rest configuration;

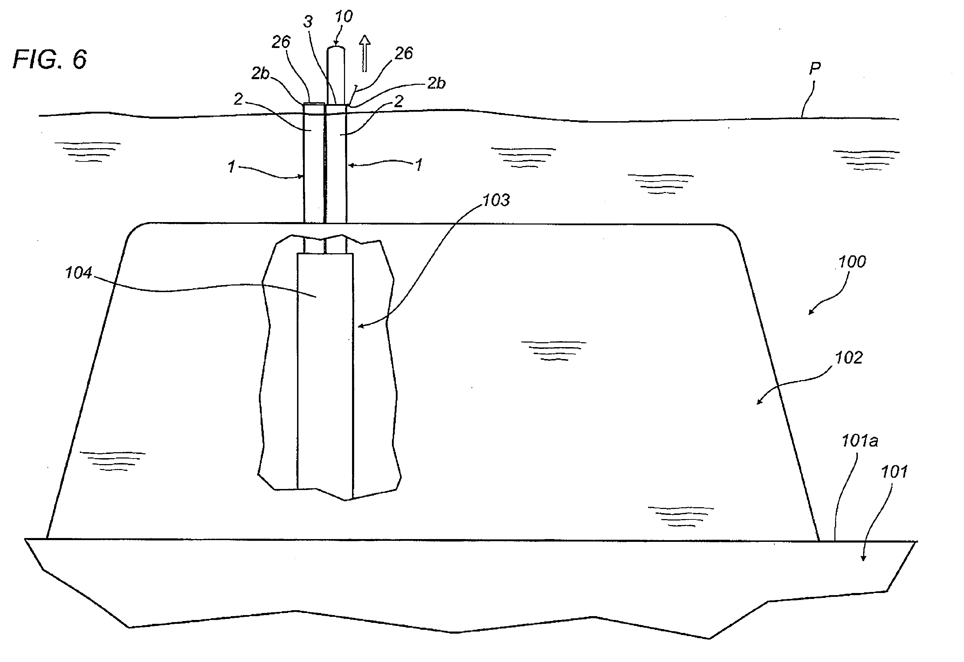

- Figure 6 shows a detail of the submarine of Figure 4, with some parts removed to better illustrate the launching apparatus according to the invention in a launching configuration.

### Detailed Description of the Preferred Embodiments of the Invention

With reference to the accompanying drawings, the numeral 1 denotes an apparatus according to this invention for launching a remotely piloted aircraft 50 from a submarine 100.

The term "remotely piloted aircraft" is used to mean any unmanned aerial vehicle which is radio controlled or autopiloted (running mission-specific software) and which is preferably equipped with photo cameras and/or diverse sensors, for multiple uses in missions of numerous kinds.

During these missions, the data acquired by the aircraft can be received in real-time by an antenna of the submarine's on-board communication system or downloaded at a later stage in a predetermined zone.

In technical, jargon, the aircrafts 50 are called UAVs, an acronym for *Unmanned Aerial Vehicles.*

Most aircrafts of this type are "expendable", that is to say, they are not recovered at the end of the mission.

The launching apparatus 1 is mounted on the submarine 100, that is to say, on a watercraft which is capable of surface navigation and which, when necessary, can submerge for more or less extended periods of time to continue navigating underwater.

As mentioned above, in this invention, the term "submarine" is used to mean any submersible watercraft, including naval vessels designed mainly for independent operation below the surface of the water and also able to navigate partly above surface.

In other words these naval vessels developed out of traditional "submersible" watercraft and thus fall within the scope of the invention. In this regard, it should be noted that the apparatus 1 according to the invention applies mainly to naval submarines since the remotely piloted aircrafts 50 are used principally for military reconnaissance/mission purposes.

The submarine 100 comprises a hull 101 extending longitudinally along a respective principal direction "A" and designed to operate underwater, below the surface "P" of the water.

The hull 101 is elongate in shape and preferably has a streamlined front portion 101b to improve water penetration during navigation.

The hull 101 is thus powered to navigate along a respective direction of travel both underwater and (partly) above the surface of the water.

The hull 101 also comprises an upper portion 101a (or back) with a conning tower 102 (or sail) rising up therefrom.

The conning tower 102 thus defines a protrusion (or projection) extending upwards from the upper portion 101a (or back) of the hull 101 transversally (at right angles) to its principal direction "A".

The conning tower 102 combines all the equipment for controlling and operating a series of devices (not illustrated in detail), including the launching apparatus 1 according to this invention.

More specifically, any device which must operate, or which preferably operates, above the water's surface, is connected to the conning tower 102.

Thus, these devices are mounted on supporting elements which are connected to the conning tower 102 and which allow them to emerge from the water (that is, from the surface "P") during navigation of the submarine 100 at periscope depth.

The term "periscope depth" is commonly used to denote an operating condition of the submarine 100 in which the hull is submerged (i.e. entirely under the surface "P") and at least one of the aforementioned devices is outside the water.

In light of this, the submarine 100 comprises at least one mast 103 rising up from the hull 101 along a respective principal direction of extension "B" above the water's surface "P", piercing the selfsame surface "P", during navigation of the submarine at periscope depth.

In other words, the submarine 100 is equipped with at least one elongate member (the mast 103) that rises up vertically along an axis substantially at right angles to the principal direction of extension "A" of the hull 101.

Preferably, the mast 103 comprises the launching apparatus 1 and is configured to lift the latter vertically (that is, along a direction parallel to the principal direction of extension "B") between a retracted position and an extended position, causing it to rise up above the water's surface "P", piercing the selfsame surface "P", in order to launch the aircraft 50.

Thus, the mast 103 is movable up and down (telescopically) relative to the hull 101 in such a way as to keep constant the periscope depth (that is, the depth at which the submarine travels during navigation at periscope depth).

More specifically, the mast 103 comprises a guide member 104 extending along a respective principal axis of extension and able to be housed in an upper portion 101a of the submarine 100.

The apparatus 1 for launching the aircraft 50 is slidably associated with (preferably housed in) the guide member 104.

The mast 103 also comprises movement means (hydraulic or electrical) by which the apparatus is moved along the guide member 104 from the retracted position to the extended position and vice versa.

Preferably, the mast 103 comprises at least two apparatuses 1 for launching the remotely piloted aircraft 50 and rigidly connected to each other in parallel by a connecting flange 25.

More specifically, the flange 25 is slidably constrained to the guide member 104 to allow the launching apparatuses 1 to slide.

Thus, the flange 25 acts substantially like a skid along the guide member 104.

Each apparatus 1 for launching the remotely piloted aircraft 50 comprises a tubular body 2 inserted (slidably) in the mast 103 of the submarine 100 and extending along a respective principal direction "C" between a first end 2a and a second end 2b, opposite the first end 2a and defining an ejector mouth 3 for the remotely piloted aircraft 50.

The tubular body 2 is substantially a tube for launching the aircraft (UAV) 50 and having a cavity 2c in which the aircraft 50 is inserted.

The principal direction "C" is preferably vertical, substantially aligned with the direction of extension "B" of the mast 103.

Thus, the aircraft 50 is launched like a rocket along an initially vertical path.

That means the launch can be performed while keeping the second end 2b, that is, the ejector mouth, of the tubular body 2 in the vicinity of the waster's surface "P".

Advantageously, that means that the submarine 100 remains hidden even during launching of the aircraft 50.

In the embodiment illustrated, the tubular body 2 has a prismatic cavity 2c, preferably cylindrical. The diameter of the cavity 2c measures between 110 millimetres and 190 millimetres, preferably between 130 millimetres and 170 millimetres, and more preferably around 155 millimetres.

Housed in the tubular body 2 (near the first end 2a), the launching apparatus 1 comprises a projectile 10 which is configured to slide along the selfsame tubular body 2 to come out of the ejector mouth 3 during launching.

In the embodiment illustrated, the projectile 10 is a shell which houses the remotely piloted aircraft 50.

In other words, the aircraft 50, in its folded-up configuration, sits in a substantially cylindrical (hollow) shell to slide inside the tubular body 2 while at the same time being protected at least partly from the stresses caused by launching.

Preferably, the projectile 10 has a streamlined front portion for improved air penetration.

In an alternative embodiment, however, the projectile is defined by the selfsame aircraft in its folded-up configuration.

Thus, during launching, reference may be made to the "projectile" and to the "aircraft" practically without distinction since the separation, if any, between the two occurs at a final stage of launching operations, when the launching apparatus 1 has completed its function.

The apparatus 1 also comprises launching means 4 by which the projectile (or the aircraft 50) is propelled (expelled) from the mast 103 of the submarine 100 (or more specifically, from the ejector mouth 3) and launched into flight.

The launching means 4 comprise a pneumatic ejection device 5 connected to the tubular body 2 and configured to push the projectile 10 out of the ejector mouth 3 until reaching a first height "Q1" above the water's surface "P".

More in detail, the pneumatic device 5 uses air under pressure to apply a thrusting action on the projectile 10 from the first end 2a to the second end 2b of the tubular body 2.

Preferably, the pneumatic ejection device 5 is configured to feed a flow of compressed air (air under pressure) into the tubular body 2, directed from the first end 2a to the second end 2b, in such a way as to expel the projectile 10 from the ejector mouth 3

The thrusting action on the projectile 10 is applied by the compressed air.

Preferably, the pneumatic device 5 comprises a charging chamber 6 connected to the tubular body 2, at the first end 2a, and configured to accumulate a predetermined quantity of compressed air.

In other words, the chamber 6 and the tubular body 2 are connected to each other in series.

Preferably, the charging chamber 6 is substantially tubular in shape and is flanged (or rigidly connected) to the first end 2a of the tubular body 2, thereby forming a single tubular duct.

Consequently, the two apparatuses 1 connected in parallel substantially define a pair of tubes placed alongside, and rigidly connected to, each other.

Advantageously, this considerably limits the overall dimensions.

The chamber 6 is also connected to a source of air through a suction duct 7.

In effect, the air is fed into the charging chamber 6 from a source of air (for example, a circuit on board the submarine) only at the time of launching.

Thus, the suction duct 7 feeds the air into the charging chamber 6 and it is only when it is inside the charging chamber 6 that the air is compressed to a preset pressure value.

In other words, following a command given by an operator, the suction duct 7 draws in a preset quantity of air until the pressure of the air inside the chamber 6 reaches a preset value.

Advantageously, this makes the submarine 100 and the apparatus 1 itself particularly reliable.

In effect, this is justified by the dangerousness connected with the storage of compressed air under high pressure in such an exposed structural part of the submarine 100 as the conning tower 102 (or sail).

Thus, the pneumatic device 5 releases the compressed air into the tubular body 2 only when the preset pressure value is reached (that is, the moment that value is reached or exceeded).

In light of this, the device comprises an element 8 for regulating air flow into the tubular body 2 and interposed between the selfsame tubular body 2 and the charging chamber 6.

The element 8 acts substantially like a valve since it allows fluid (air) to pass under predetermined conditions and can be changed according to the value of the pressure inside the charging chamber 6 between a blocked configuration in which it prevents air from flowing from the chamber 6 into the tubular body 2 (and vice versa), and a launching configuration in which it allows compressed air to flow out of the charging chamber 6 into the tubular body 2.

In the preferred embodiment, the flow regulating element 8 is defined by a partition 9.

The partition 9 has at least one pre-weakened portion designed to break or yield, without shattering, when the pressure inside the charging chamber 6 reaches the predetermined value.

The partition 9 is substantially disposable (that is to say, expendable) since it can change only from the blocked configuration (in which it is whole) to the launching configuration, in which the pre-weakened portion breaks and allows air to pass through.

Preferably, the partition 9 is a compression or inverse circular element (disc), with a segment-shaped calibrated section characterized by the presence of a plurality of incisions (6 or 4). This element, which is made principally of stainless steel or aluminium, responds to overpressure by bursting in controlled manner without shattering.

It should be noted that the preset pressure value is between 2 and 80 bar, depending on materials and thickness.

In the preferred embodiment, the preset pressure value (or breaking pressure) is approximately 20 bar.

Preferably, the partition 9 has a peripheral annular portion interposed between the first end 2a of the tubular body 2 and an upper edge 6a of the charging chamber 6 in order to keep it in position.

It should be noted that the first end 2a of the tubular body 2 and an upper edge 6a of the charging chamber 6 are flanged to each other.

The launching means 4 also comprise a fuel-driven propulsion unit 11 connected to the projectile 10 at least during launching and designed to be activated when the projectile 10 is outside the tubular body 2 to push it to a second height Q2 greater than the first height "Q1".

In other words, the projectile 10 is furnished with a shell containing the aircraft 50 and a tail 10a rigidly connected to the fuel-driven propulsion unit 11.

Alternatively, if there is no shell, the propulsion unit might be associated directly with the aircraft 50.

Once the projectile 10 has left the tubular body 2, the propulsion unit 11 can be operated (automatically, through a control unit, or manually) to provide it with the additional thrust it needs to reach a height (the second height Q2) greater than the height it would reach by pneumatic expulsion only (first height Q1).

In this invention, the first height "Q1" is approximately 50 metres, while the second height "Q2" is in the order of 1000 metres.

Advantageously, the "double thrust" (pneumatic and fuel-driven) makes it possible to meet two different requirements, namely:
- limiting stress on the aircraft 50,
- reducing stress on the submarine 100 and/or on the mast 103.

Preferably, the fuel-driven propulsion unit 11 is of the solid propellant type.

More specifically, the propulsion unit 11 comprises a solid-propellant capsule 12 anchored to the projectile 10 in the proximity of its tail 10a.

The term "capsule" is used to mean any container designed to be anchored to the projectile 10 or made as one with it.

Thus, under non-use conditions, the capsule 12 is located in the proximity of the first end 2a of the tubular body 2, substantially facing the partition 9.

Preferably, the capsule 12 is at least partly defined by a container 13 extending from its first end 13a anchored to the projectile 10 to its second end 13b, opposite the first end 13a and furnished with a nozzle 14.

Inside it, the container 14 houses at least one grain 15 of solid propellant.

The grain is in the form of a pressed or extruded solid (similar to hard rubber or plastic) and is located in the container 13.

The grain 14 may be loaded like a cartridge, that is to say, manufactured separately (by extrusion or mould casting) and then loaded into the container 13, or it may be bonded to the frame (that is to say, cast directly inside it).

In the preferred embodiment, the grain is of the type loaded like a cartridge, so that the capsule 12 can be interfaced with the projectile 10 containing the aircraft 50.

The propellant is preferably of the homogeneous or "double base" type.

In other words, the propellant is substantially colloidal and comprises a mixture of explosives held together by a colloidal material. Each explosive contains fuel, an oxidizer and a binder.

Preferably, the mixture contains nitrocellulose (NC) dissolved in nitroglycerin (NG), plus small quantities of additives. The oxidizer/fuel ratio which maximizes the Isp (specific impulse) is close to the stoichiometric ratio and corresponds to an NG/NC ratio of 8:6.

It should be noted that the mechanical requirements for the grain and the requirements for propellant stability do not allow ratios greater than 1.

An absence of additives is preferable so that the propellants (of double base type) produce smokeless exhaust gases.

This is particularly important to reduce the wake (or signature) of the projectile 10.

Advantageously, this allows the aircraft 50 and the submarine 100 to remain hidden.

In other words, the solid propellant used in this invention is inexpensive, produces a non-toxic (smokeless) exhaust and has good mechanical properties.

Preferably, the propulsion unit 11 comprises a thrust base 16 located between the pneumatic device 5 and the capsule 12.

More specifically, the thrust base 16 is held in abutment against the capsule 12 in order to protect the latter from the action of the compressed air and to facilitate its expulsion (from the tubular body 2) by acting as a thrust surface.

Preferably, the thrust base 16 is shaped to match a side wall of the capsule 12.

Thus, the thrust base 16 is designed to protect both the nozzle 14 and the grain 15 of propellant against the action of the partition 9 being opened by the air under pressure.

The thrust base 16 goes into abutment on a suitable hollow formed on the inside surface of the capsule 12. That means it simply rests on the hollow.

Advantageously, that facilitates its expulsion when the propulsion unit 11 fires.

In effect, once the projectile 10 (which the capsule 12 is connected to) has started moving along the tubular body 2, the thrust base 16 is no longer held in abutment against the capsule 12 and is thus free to slide relative to, and away from, the capsule 12 and can be easily removed when the propulsion unit 11 is fired.

More in detail, the apparatus 1 comprises a spacer 20 interposed between the pneumatic device (more specifically, the partition 9) and the thrust base 16 in order to keep the thrust base 16 at a predetermined distance from the pneumatic device 5 and in abutment against the capsule 12.

That way, the propulsion unit 11 is kept at a distance from the partition 9 such as to provide a compressed air relief outlet and to allow deformation of the partition 9 without causing structural damage to the capsule 12.

In a first embodiment, the spacer 20 comprises a connecting portion 20a, having the shape of a flange, and a supporting portion 20b, substantially tubular in shape, which are rigidly connected to each other (or made as one).

The connecting portion 20a is joined directly and flanged to the charging chamber 6 and to the tubular body 2. More specifically, the connecting portion is interposed between the connecting flanges of the charging chamber 6 and of the tubular body 2.

The supporting portion 20b extends at right angles to the connecting portion 20a in tubular fashion (inside the tubular body 2) and acts as a support for the thrust base 16 of the propulsion unit 11.

Preferably, the supporting portion 20b has an external ledge which supports an external surface of the capsule 12.

Thus, the supporting portion 20b comprises the external ledge for supporting the capsule 12 and an upper edge for supporting the thrust base 16.

In a second embodiment, the supporting portion 20b has a tubular side wall and, at the top of the wall, a covering disc (made as one).

The covering disc has a peripheral portion with a plurality of through holes (for venting the compressed air inside the tubular body 2) and a central portion comprising a fastener 22 for the thrust base.

More in detail, the fastener has a hollow body 23 into which a central protuberance 24 of the thrust base 16 can be inserted.

Thus, the capsule 12 is supported by the thrust base 16 which is in turn supported by the spacer thanks to the coupling between the hollow body 23 and the central protuberance 24.

In both embodiments, the apparatus 1 comprises locking means 17 for the projectile 10 (and hence for the propulsion unit 11) by which the projectile 10 is constrained to the launching apparatus 1 when the latter is not in use.

Advantageously, this prevents the projectile from sliding in the tubular body 2 during navigation.

In the embodiments illustrated, the locking means 17 comprise a connecting pin 18 interposed between the propulsion unit 11 and the pneumatic ejector device 5 to lock the two together securely.

More in detail, the pin 18 is interposed between the capsule 12 and the spacer 20.

More specifically, in the first embodiment, the pin 18 connects the side wall of the capsule 12 and the supporting portion 20b (tubular in shape) of the spacer.

In the second embodiment, the pin 18 connects the hollow body 23 and the central protuberance 24 of the thrust base 16.

Obviously, to allow the projectile 10 to be launched, the connecting pin 18 is configured to break when the pneumatic device 5 is activated.

Thus, the pin 18 is what is known in technical jargon as a "breaking pin" because it is designed to break when the launching apparatus 1 is activated.

To sum up, the charging chamber 6, the spacer 20 and the tubular body 2 are flanged together, while the partition 9 is solidly inserted between them (through the peripheral annular portion 9a).

The connecting pin 18 locks the capsule 12 (first embodiment) or the thrust base (second embodiment) to the supporting portion 20b of the spacer 20, thereby preventing movement and hence possible damage to the aircraft 50 during navigation.

Preferably, the launching apparatus 1 comprises a hatch 26 located at the second end 2b of the tubular body 2.

The hatch 26 is movable between a closed configuration in which it hermetically closes the ejector mouth 3 and an open position where it leaves the ejector mouth 3 free to allow the projectile 10 to be launched,

Preferably, the hatch is moved by a pneumatic/hydraulic actuator (not illustrated).

Still more preferably, the pneumatic actuator is in fluid communication with the suction duct 7 of the charging chamber 6, so that a single resource is used both to fill the chamber 6 and to open the hatch 26.

This invention also has for an object a method for launching a remotely piloted aircraft 50 from a submarine 100, comprising the steps set out below.

A first step comprises preparing a tubular body 2 extending along a respective principal direction "C" between a first end 2a and a second end 2b, opposite the first end 2a and defining an ejector mouth 3 for the aircraft 50.

The tubular body 2 is preferably of the type described above.

The method also comprises preparing a projectile 10 inside the tubular body 2.

The projectile 10, too, is like the one described above, that is to say, it comprises the remotely piloted aircraft 50 and a fuel-driven propulsion unit 11.

The method also comprises a first step of ejecting the projectile 10.

This step comprises feeding air at a preset pressure into the tubular body 2, from the first end 2a towards the second end 2b, to push the projectile 10 (and hence the aircraft 50) out through the ejector mouth 3 until reaching a first height "Q1".

That means that the pneumatic expulsion is sufficient to reach that height (Q1), not that the height is reached only by this propulsive force.

In effect, after the pneumatic device 5 has been activated, when the projectile is outside the tubular body 2, the propulsion unit 11 is activated to carry the projectile from the first height "Q1" to the second height "Q2", greater than the first height "Q1".

As mentioned above, in this invention, the first height "Q1" is approximately 50 metres, while the second height "Q2" is in the order of 1000 metres.

This step is performed just before reaching the height "Q1" or upon reaching the same.

It should be noted that the trajectory of the projectile during pneumatic ejection and fuel-driven propulsion is substantially vertical (or any case aligned with the principal direction "C" of the tubular body 2).

After the propulsion unit 11 has been extinguished, the projectile continues to rise until it reaches the second height "Q2".

In other words, on termination of the direct action of the propulsion unit 11, inertia causes the projectile 10 to keep the motion previously imparted to it for a certain distance without any further direct propulsive action.

Once the effect of the two propulsive systems (pneumatic and fuel-driven) has been exhausted, the projectile starts a descending stage (following a parabolic trajectory).

During the descending stage, the method comprises a step of separating the aircraft 50 from the projectile 10,

In other words, the aircraft 50, which has remained in a folded-up configuration, is now released by the projectile 10 and unfurls its wings (not illustrated) to start its flight (operational height) and its mission.

The invention achieves the preset aims and brings important advantages.

In effect, the use of a substantially vertical launching apparatus driven by a combined propulsive system makes it possible to perform a particularly high launch without, however, subjecting either the submarine or the aircraft to excessive stress.

Furthermore, the tubular shape of the apparatus makes it particularly compact and simple to construct.

Moreover, the use of solid propellants eliminates the wake produced by the projectile in flight, making the projectile itself and the submarine difficult to see.

What is more, "breaking" systems for fastening the projectile to the pneumatic device prevent damage to the aircraft without affecting ease of launching.

## Claims

1. An apparatus for launching a remotely piloted aircraft (50) from a submarine (100), comprising:
- a tubular body (2) insertable into a mast (103) of the submarine (100), extending along a respective principal direction (C) between a first end (2a) and a second end (2b), opposite the first end (2a), and defining an ejector mouth (3) for the remotely piloted aircraft (50);
- a projectile (10) housed in the tubular body (2) and configured to slide along the tubular element (2) to come out of the ejector mouth (3) during the launch; the projectile comprising the remotely piloted aircraft (50);
- launching means (4) for the projectile (10) configured to propel the projectile (10) into the air from the mast (103) of the submarine (100);
**characterized in that** the launching means (4) comprise:
- a pneumatic ejection device (5) connected to the tubular body (2) and configured to push the projectile (10) out of the ejector mouth (3) until reaching a first height;
- a fuel-driven propulsion unit (11) connected to the projectile (10) during launching and designed to be activated when the projectile (10) is outside the tubular body (2) to propel it to a second heigh greater than the first height.

2. The launching apparatus according to claim 1, **characterized in that** the pneumatic ejection device (5) is configured to feed a predetermined amount of air under pressure into the tubular body (2) in order to push the projectile (10) out of the ejector mouth (3).

3. The launching apparatus according to claim 1 or 2, **characterized in that** the pneumatic ejection device (5) comprises:
- a charging chamber (6) connected to the tubular body (2), at the first end (2a), and configured to accumulate a predetermined quantity of compressed air;
- a partition (9) interposed between the chamber (6) and the tubular body (2) and able to change, as a function of a pressure value inside the charging chamber (6), between a blocked configuration in which it prevents air from flowing from the chamber (6) into the tubular body (2), and a launching configuration in which it allows compressed air to flow out of the charging chamber (6) into the tubular body (2).

4. The launching apparatus according to claim 3, **characterized in that** the charging chamber (6) comprises a suction duct (7) by which, following a command given by an operator, the predetermined quantity of air is drawn in until the pressure of the air inside the selfsame chamber (6) reaches a predetermined value.

5. The launching apparatus according to claim 3 or 4, **characterized in that** the partition (9) has at least one pre-weakened portion designed to yield when the pressure inside the charging chamber (6) reaches the predetermined value so as to allow the compressed air to flow into the tubular body (2).

6. The launching apparatus according to any of the preceding claims, **characterized in that** the fuel-driven propulsion unit (11) comprises a solid-propellant capsule (12) anchored to the projectile (10) and located in the proximity of the first end (2a) of the tubular body (2).

7. The apparatus according to claim 6, **characterized in that** the capsule (12) is at least partly defined by a container (13) extending from a first end (13a) anchored to the projectile (10) to a second end (13b), opposite the first end (13a) and furnished with a nozzle (14); at least one grain (15) of solid propellant being securely housed inside the container (13).

8. The apparatus according to claim 7, **characterized in that** the fuel-driven propulsion unit (11) comprises a thrust base (16) held in abutment against the second end (13b) of the container (13) in order to protect the capsule (12) from the action of the compressed air and to facilitate its expulsion by acting as a thrust surface.

9. The apparatus according to any of the preceding claims, **characterized in that** it comprises locking means (17) operatively interposed between the projectile (10) and the pneumatic launching device (5) to hold them securely together so as to prevent the projectile (10) from moving inside the tubular body (2) during navigation of the submarine (100); the locking means (17) being configured to be deactivated upon activation of the pneumatic device (5) to allow the projectile (10) to slide along the tubular body (2).

10. The apparatus according to any of the preceding claims, **characterized in that** it comprises a hatch (26) located at the second end (2b) of the tubular body (2); the hatch (26) being movable between a closed configuration in which it hermetically closes the ejector mouth (3) and an open position where it leaves the ejector mouth (3) free in order to allow the projectile (10) to be launched.

11. A mast for a submarine (100), comprising:
- a guide member (104) extending along a respective principal axis of extension (B) and able to be housed in an upper portion (101a) of a submarine (100); **characterized in that** it comprises at least one apparatus (1) for launching a remotely piloted aircraft (50) according to any of the preceding claims, slidably inserted in the guide member (104) to move telescopically along a direction parallel to the principal axis of extension (B) between a retracted position and an extended position, causing it to rise up above the water's surface (P), piercing the selfsame surface (P), in order to launch the aircraft (50).

12. The mast according to claim 11, **characterized in that** it comprises two apparatuses (1) for launching a remotely piloted aircraft (50) and rigidly connected to each other in parallel by a connecting flange (25); the flange (25) being slidably constrained to the guide member to allow sliding of the apparatuses (1) for launching a remotely piloted aircraft (50).

13. A submarine comprising:
- a hull (101) extending longitudinally along a respective principal direction (A) and designed to operate underwater, below the surface (P) of the water;
- a conning tower (102) rising up from an upper portion (101a) of the hull (101);
- at least one mast (103) according to claim 11 or 12, housed in the conning tower (102).

14. A method for launching a remotely piloted aircraft (50) from a submarine (100), comprising the steps of:
- preparing a tubular body (2) extending along a respective principal direction (C) between a first end (2a) and a second end (2b), opposite the first end (2a) and defining an ejector mouth (3);
- preparing a projectile (10) housed into the tubular body (2); the projectile (10) comprising a remotely piloted aircraft (50) and a fuel-driven propulsion unit (11);
- feeding air under pressure into the tubular body (2), from the first end (2a) towards the second end (2b), to push the projectile (10) out through the ejector mouth (3) until reaching a first height;
- activating the propulsion unit (11) to carry the projectile (10) to a second height, greater than the first height.

15. The method according to claim 14, **characterised in that** it comprises the steps of:
- extinguishing the propulsion unit (11);
- letting the projectile (10) descend from the second height to an operational height for starting the flight of the aircraft (50);
- separating the aircraft (50) from the projectile (10) during the step of letting it descend.

## Patentansprüche

1. Vorrichtung zum Abschießen eines ferngesteuerten Fluggerätes (50) aus einem Unterwasserfahrzeug (100), umfassend:
- einen rohrförmigen Körper (2), der in einen Mast (103) des Unterwasserfahrzeugs (100) einsetzbar ist, der sich entlang einer entsprechenden Hauptrichtung (C) zwischen einem ersten Ende (2a) und einem zweiten Ende (2b) gegenüber dem ersten Ende (2a) erstreckt und eine Auswurföffnung (3) für das ferngesteuerte Fluggerät (50) definiert;
- ein Geschoss (10), das im rohrförmigen Körper (2) aufgenommen und dazu konfiguriert ist, das rohrförmige Element (2) entlang zu gleiten, um während des Abschießens aus der Auswurföffnung (3) herauszukommen; wobei das Geschoss das ferngesteuerte Fluggerät (50) umfasst;
- ein Abschussmittel (4) für das Geschoss (10), das dazu konfiguriert ist, das Geschoss (10) vom Mast (103) des Unterwasserfahrzeuges (100) in die Luft zu treiben; **dadurch gekennzeichnet, dass** das Abschussmittel (4) Folgendes umfasst:
- eine pneumatische Auswurfeinrichtung (5), die mit dem rohrförmigen Körper (2) verbunden und dazu konfiguriert ist, das Geschoss (10) aus der Auswurföffnung (3) herauszustoßen, bis es eine erste Höhe erreicht;
- eine kraftstoffbetriebene Antriebseinheit (11), die während des Abschießens mit dem Geschoss (10) verbunden und dazu konzipiert ist, aktiviert zu werden, wenn sich das Geschoss (10) außerhalb des rohrförmigen Körpers (2) befindet, um es in eine zweite Höhe zu treiben, die größer als die erste Höhe ist.

2. Abschussvorrichtung nach Anspruch 1, **dadurch gekennzeichnet, dass** die pneumatische Auswurfeinrichtung (5) dazu konfiguriert ist, eine vorgegebene Menge druckbeaufschlagter Luft in den rohrförmigen Körper (2) einzuführen, um das Geschoss (10) aus der Auswurföffnung (3) herauszustoßen.

3. Abschussvorrichtung nach Anspruch 1 oder 2, **dadurch gekennzeichnet, dass** die pneumatische Auswurfeinrichtung (5) Folgendes umfasst:
- eine Befüllungskammer (6), die am ersten Ende (2a) mit dem rohrförmigen Körper (2) verbunden und dazu konfiguriert ist, eine vorgegebene Menge von Druckluft zu akkumulieren;
- eine Trennwand (9), die zwischen der Kammer (6) und dem rohrförmigen Körper (2) liegt und in Abhängigkeit eines Druckwertes in der Befüllungskammer (6) zwischen einer blockierten Konfiguration, in der sie verhindert, dass Luft aus der Kammer (6) in den rohrförmigen Körper (2) fließt, und einer Abschusskonfiguration, in der sie gestattet, dass Druckluft aus der Befüllungskammer (6) in den rohrförmigen Körper (2) fließt, wechselbar ist.

4. Abschussvorrichtung nach Anspruch 3, **dadurch gekennzeichnet, dass** die Befüllungskammer (6) eine Saugleitung (7) umfasst, durch die nach einem von einem Bediener gegebenen Befehl die vorgegebene Menge Luft eingezogen wird, bis der Druck der Luft in dieser Kammer (6) einen vorgegebenen Wert erreicht.

5. Abschussvorrichtung nach Anspruch 3 oder 4, **dadurch gekennzeichnet, dass** die Trennwand (9) mindestens einen Vorschwächungsabschnitt aufweist, der zum Nachgeben konzipiert ist, wenn der Druck in der Befüllungskammer (6) den vorgegebenen Wert erreicht, so dass ein Hineinfließen der Druckluft in den rohrförmigen Körper (2) gestattet wird.

6. Abschussvorrichtung nach einem der vorangehenden Ansprüche, **dadurch gekennzeichnet, dass** die kraftstoffbetriebene Antriebseinheit (11) eine Kapsel (12) mit festem Treibstoff umfasst, die mit dem Geschoss (10) verankert ist und in der Nähe des ersten Endes (2a) des rohrförmigen Körpers (2) liegt.

7. Vorrichtung nach Anspruch 6, **dadurch gekennzeichnet, dass** die Kapsel (12) zumindest teilweise von einem Behälter (13) definiert wird, der sich von einem ersten Ende (13a), das mit dem Geschoss (10) verankert ist, zu einem zweiten Ende (13b) gegenüber dem ersten Ende (13a) erstreckt und mit einer Düse (14) ausgestattet ist; wobei mindestens ein Treibsatz (15) eines festen Treibstoffs fest im Behälter (13) aufgenommen ist.

8. Vorrichtung nach Anspruch 7, **dadurch gekennzeichnet, dass** die kraftstoffbetriebene Antriebseinheit (11) eine Schubbasis (16) umfasst, die in Anlage am zweiten Ende (13b) des Behälters (13) gehalten ist, um die Kapsel (12) von der Einwirkung der Druckluft zu schützen und ihren Ausstoß zu vereinfachen, indem sie als eine Schuboberfläche wirkt.

9. Vorrichtung nach einem der vorangehenden Ansprüche, **dadurch gekennzeichnet, dass** sie ein Arretiermittel (17) umfasst, das betriebswirksam zwischen dem Geschoss (10) und der pneumatischen Abschusseinrichtung (5) liegt, um sie fest zusammenzuhalten, sodass verhindert wird, dass sich das Geschoss (10) im rohrförmigen Körper (2) während des Navigierens des Unterwasserfahrzeugs (100) im rohrförmigen Körper (2) bewegt; wobei das Arretiermittel (17) dazu konfiguriert ist, bei Aktivierung der pneumatischen Einrichtung (5) deaktiviert zu werden, damit ein Gleiten des Geschosses (10) entlang dem rohrförmigen Körper (2) gestattet wird.

10. Vorrichtung nach einem der vorangehenden Ansprüche, **dadurch gekennzeichnet, dass** sie eine Luke (26) umfasst, die sich am zweiten Ende (2b) des rohrförmigen Körpers (2) befindet; wobei die Luke (26) zwischen einer geschlossenen Konfiguration, in der sie die Auswurföffnung (3) hermetisch verschließt, und einer offenen Position, in der sie die Auswurföffnung (3) frei lässt, um einen Abschuss des Geschosses (10) zu gestatten, beweglich ist.

11. Mast für ein Unterwasserfahrzeug (100), umfassend:
- ein Führungsglied (104), das sich entlang einer entsprechenden Haupterstreckungsachse (B) erstreckt und in einem oberen Abschnitt (101a) eines Unterwasserfahrzeugs (100) aufnehmbar ist;
**dadurch gekennzeichnet, dass** er mindestens eine Vorrichtung (1) zum Abschießen eines ferngesteuerten Fluggerätes (50) nach einem der vorangehenden Ansprüche umfasst, die gleitbar in das Führungselement (104) eingeführt ist, um sich teleskopartig entlang einer Richtung, die parallel zur Haupterstreckungsachse (B) ist, zwischen einer eingezogenen Position und einer ausgezogenen Position zu bewegen, wodurch bewirkt wird, dass sie sich über die Wasseroberfläche (P) erhebt und diese Oberfläche (P) durchdringt, um das Fluggerät (50) abzuschießen.

12. Mast nach Anspruch 11, **dadurch gekennzeichnet, dass** er zwei Vorrichtungen (1) zum Abschießen eines ferngesteuerten Fluggerätes (50) umfasst, die parallel durch einen Verbindungsflansch (25) starr miteinander verbunden sind; wobei der Flansch (25) gleitbar am Führungsglied befestigt ist, um ein Gleiten der Vorrichtungen (1) zum Abschießen eines ferngesteuerten Fluggerätes (50) zu gestatten.

13. Unterwasserfahrzeug, umfassend:
- einen Rumpf (101), der sich der Länge nach entlang einer entsprechenden Hauptrichtung (A) erstreckt und zum Betrieb unter Wasser, unter der Wasseroberfläche (P), konzipiert ist;
- einen Kommandoturm (102), der sich aus einem oberen Abschnitt (101a) des Rumpfes (101) erhebt;
- mindestens einen Mast (103) nach Anspruch 11 oder 12, der im Kommandoturm (102) aufgenommen ist.

14. Verfahren zum Abschießen eines ferngesteuerten Fluggerätes (50) aus einem Unterwasserfahrzeug (100), umfassend die folgenden Schritte:
- Herstellen eines rohrförmigen Körpers (2), der sich entlang einer entsprechenden Hauptrichtung (C) zwischen einem ersten Ende (2a) und einem zweiten Ende (2b) gegenüber dem ersten Ende (2a) erstreckt und eine Auswurföffnung (3) definiert;
- Herstellen eines Geschosses (10), das im rohrförmigen Körper (2) aufgenommen ist; wobei das Geschoss ein ferngesteuertes Fluggerät (50) und eine kraftstoffbetriebene Antriebseinheit (11) umfasst;
- Einführen von druckbeaufschlagter Luft in den rohrförmigen Körper (2), vom ersten Ende (2a) in Richtung des zweiten Endes (2b), um das Geschoss (10) durch die Auswurföffnung (3) herauszustoßen, bis es eine erste Höhe erreicht;
- Aktivieren der Antriebseinheit (11), um das Geschoss (10) in eine zweite Höhe zu treiben, die größer als die erste Höhe ist.

15. Verfahren nach Anspruch 14, **dadurch gekennzeichnet, dass** es die folgenden Schritte umfasst:
- Löschen der Antriebseinheit (11);
- Absteigenlassen des Geschosses (10) von der zweiten Höhe in eine Betriebshöhe, um den Flug des Fluggerätes (50) zu starten;
- Trennen des Fluggerätes (50) vom Geschoss (10) während des Schrittes des Absteigenlassens.

## Revendications

1. Dispositif de lancement d'un aéronef piloté à distance (50) à partir d'un sous-marin (100), comprenant :
- un corps tubulaire (2), pouvant être inséré dans un mât (103) du sous-marin (100), se développant le long d'une direction principale respective (C) entre une première extrémité (2a) et une seconde extrémité (2b), opposée à la première extrémité (2a), et définissant une bouche d'éjecteur (3) pour l'aéronef piloté à distance (50) ;
- un projectile (10) logé dans le corps tubulaire (2) et configuré pour coulisser le long de l'élément tubulaire (2) pour sortir de la bouche d'éjecteur (3) lors du lancement ; le projectile comprenant l'aéronef piloté à distance (50) ;
- des moyens de lancement (4) destinés au projectile (10) configurés pour propulser le projectile (10) dans les airs à partir du mât (103) du sous-marin (100) ; **caractérisé en ce que** les moyens de lancement (4) comprennent :
- un dispositif d'éjection pneumatique (5) relié au corps tubulaire (2) et configuré pour expulser le projectile (10) hors de la bouche d'éjecteur (3) jusqu'à ce qu'il atteigne une première hauteur ;
- une unité de propulsion alimentée par un carburant (11) reliée au projectile (10) lors du lancement et conçue pour être activée lorsque le projectile (10) est à l'extérieur du corps tubulaire (2) pour le propulser jusqu'à une seconde hauteur supérieure à la première hauteur.

2. Dispositif de lancement selon la revendication 1, **caractérisé en ce que** le dispositif d'éjection pneumatique (5) est configuré pour fournir une quantité d'air sous pression prédéfinie dans le corps tubulaire (2) afin d'expulser le projectile (10) hors de la bouche d'éjecteur (3).

3. Dispositif de lancement selon les revendications 1 ou 2, **caractérisé en ce que** le dispositif d'éjection pneumatique (5) comprend :
- une chambre de chargement (6) reliée au corps tubulaire (2) à la première extrémité (2a), et configurée pour accumuler une quantité d'air comprimé prédéfinie ;
- une cloison (9) interposée entre la chambre (6) et le corps tubulaire (2) et pouvant se modifier, en fonction d'une valeur de pression à l'intérieur de la chambre de chargement (6), entre une configuration bloquée dans laquelle elle empêche l'air de s'écouler de la chambre (6) au corps tubulaire (2), et une configuration de lancement dans laquelle elle permet à l'air compressé de s'écouler de la chambre de chargement (6) au corps tubulaire (2).

4. Dispositif de lancement selon la revendication 3, **caractérisé en ce que** la chambre de chargement (6) comprend un conduit d'aspiration (7) par lequel, en fonction d'un ordre donné par un opérateur, la quantité d'air prédéfinie est aspirée jusqu'à ce que la pression de l'air à l'intérieur de ladite chambre (6) atteigne une valeur prédéfinie.

5. Dispositif de lancement selon les revendications 3 ou 4, **caractérisé en ce que** la cloison (9) possède au moins une partie pré-fragilisée conçue pour céder lorsque la pression à l'intérieur de la chambre de chargement (6) atteint la valeur prédéfinie de manière à permettre à l'air comprimé de s'écouler dans le corps tubulaire (2).

6. Dispositif de lancement selon l'une quelconque des revendications précédentes, **caractérisé en ce que** l'unité de propulsion alimentée par un carburant (11) comprend une capsule à propergol solide (12) ancrée au projectile (10) et située à proximité de la première extrémité (2a) du corps tubulaire (2).

7. Dispositif selon la revendication 6, **caractérisé en ce que** la capsule (12) est au moins en partie définie par un récipient (13) se développant à partir d'une première extrémité (13a) ancrée au projectile (10) à une seconde extrémité (13b), opposée à la première extrémité (13a) et pourvu d'une buse (14) ; au moins un bloc (15) de propergol solide étant fermement logé à l'intérieur du récipient (13).

8. Dispositif selon la revendication 7, **caractérisé en ce que** l'unité de propulsion alimentée par un carburant (11) comprend une base de poussée (16) maintenue en butée contre la seconde extrémité (13b) du récipient (13) afin de protéger la capsule (12) de l'action de l'air comprimé et de faciliter son expulsion en agissant comme une surface de poussée.

9. Dispositif selon l'une quelconque des revendications précédentes, **caractérisé en ce qu'**il comprend des moyens de verrouillage (17) fonctionnellement interposés entre le projectile (10) et le dispositif de lancement pneumatique (5) pour les maintenir fermement ensemble de manière à empêcher le projectile (10) de se déplacer à l'intérieur du corps tubulaire (2) lors de la navigation du sous-marin (100) ; les moyens de verrouillage (17) étant configurés pour être désactivés lors de l'activation du dispositif pneumatique (5) pour permettre au projectile (10) de coulisser le long du corps tubulaire (2).

10. Dispositif selon l'une quelconque des revendications précédentes, **caractérisé en ce qu'**il comprend une trappe (26) située au niveau de la seconde extrémité (2b) du corps tubulaire (2) ; la trappe (26) étant mobile entre une configuration fermée dans laquelle elle ferme hermétiquement la bouche d'éjecteur (3) et une position d'ouverture dans laquelle elle libère la bouche d'éjecteur (3) afin de permettre au projectile (10) d'être lancé.

11. Mât destiné à un sous-marin (100), comprenant :
- un organe de guidage (104) se développant le long d'un axe d'extension principal respectif (B) et pouvant être logé dans une partie supérieure (101a) d'un sous-marin (100) ;
**caractérisé en ce qu'**il comprend au moins un dispositif (1) destiné à lancer un aéronef piloté à distance (50) selon l'une quelconque des revendications précédentes, inséré de façon coulissante dans l'organe de guidage (104) pour se déplacer de façon télescopique le long d'une direction parallèle à l'axe principal d'extension (B) entre une position rétractée et une position développée, provoquant son élévation au-dessus de la surface de l'eau (P), perçant la même surface (P), afin de lancer l'aéronef (50).

12. Mât selon la revendication 11, **caractérisé en ce qu'**il comprend deux dispositifs (1) servant à lancer un aéronef piloté à distance (50) et reliés fermement l'un à l'autre parallèlement par une bride de raccordement (25) ; la bride (25) étant solidaire de façon coulissante de l'organe de guidage pour permettre le coulissement des dispositifs (1) destinés à lancer un aéronef piloté à distance (50).

13. Sous-marin comprenant :
- une coque (101) se développant longitudinalement le long d'une direction principale respective (A) et conçue pour fonctionner sous l'eau, en dessous de la surface (P) de l'eau ;
- un kiosque (102) s'élevant d'une partie supérieure (101a) de la coque (101) ;
- au moins un mât (103) selon les revendications 11 ou 12, logé dans le kiosque (102).

14. Procédé de lancement d'un aéronef piloté à distance (50) à partir d'un sous-marin (100), comprenant les étapes de :
- préparer un corps tubulaire (2) se développant le long d'une direction principale respective (C) entre une première extrémité (2a) et une seconde extrémité (2b), opposée à la première extrémité (2a), et définissant une bouche d'éjection (3) ;
- préparer un projectile (10) logé dans le corps tubulaire (2) ; le projectile (10) comprenant un aéronef piloté à distance (50) ainsi qu'une unité de propulsion alimentée par un carburant (11) ;
- introduire de l'air sous pression dans le corps tubulaire (2), de la première extrémité (2a) vers la seconde extrémité (2b), pour propulser le projectile (10) à travers la bouche d'éjection (3) jusqu'à ce qu'il atteigne une première hauteur ;
- activer l'unité de propulsion (11) pour amener le projectile (10) à une seconde hauteur supérieure à la première hauteur.

15. Procédé selon la revendication 14, **caractérisé en ce qu'**il comprend les étapes de :
- éteindre l'unité de propulsion (11) ;
- laisser le projectile (10) descendre de la seconde hauteur à une hauteur opérationnelle de début de vol de l'aéronef (50) ;
- séparer l'aéronef (50) du projectile (10) lors de l'étape de descente de ce dernier.
